# EUROPEAN PATENT APPLICATION

(11) **EP 2 824 328 A1**
(43) Date of publication of application: **14.01.2015**
(21) Application number: 14166900.2
(22) Date of filing: 02.05.2014
(51) Int. Cl.: F03D 11/04, E04H 12/10, F16B 4/00

(54) **Bolt connection assembly for a wind turbine lattice tower structure**

(30) Priority: 09.05.2013 US 201313890543
(71) Applicant: General Electric Company, Schenectady, New York 12345 (US)
(72) Inventor: Andersen, Todd D., Taylorsville, UT Utah 84123 (US); Oliphant, David D., Taylorsville, UT Utah 84123 (US)
(74) Representative: Bedford, Grant Richard

(57) **Abstract**

A bolt connection assembly 60 is provided that is particularly well-suited for connecting structural members 50 of a lattice tower structure 48 for a wind turbine 40. The bolt connection assembly 60 includes a bolt component 62 having a head 64 and a shaft 66 and a structural bore component 70 having a bore 74 defined therethrough for receipt of the bolt component 62. The shaft 66 includes a knurled surface 72 such that the knurled surface 72 defines an outermost shaft diameter 92. Moreover, the knurled surface 72 includes a plurality of knurls 90, each defining a non-arcuate edge. The bore 74 defines a bore diameter 98, wherein the outermost shaft diameter 92 is greater than the bore diameter 98. In an assembled state of the bolt component 62 and the structural bore component 70, the bolt component 62 may be inserted within the bore 74 such that the knurled surface 72 may be deformed to friction fit within the bore diameter 98.

## Description

The present invention relates generally to wind turbine tower structures, and more particularly to a bolt connection assembly for a lattice tower structure.

Wind power is considered one of the cleanest, most environmentally friendly energy sources presently available, and wind turbines have gained increased attention in this regard. A modem wind turbine typically includes a tower, a generator, a gearbox, a nacelle, and a rotor. The rotor typically includes a rotatable hub having one or more rotor blades attached thereto. A pitch bearing is typically configured operably between the hub and the rotor blade to allow for rotation about a pitch axis. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

Conventional wind turbine towers typically include a tubular pole or a lattice structure to support a wind turbine at a considerable height to capture wind energy. The tubular pole configuration is typically more simple and easier to assemble than the lattice structure. However, tubular poles use more steel than lattice structures, resulting in a cost disadvantage with the rising prices of steel. The lattice structure, however, is relatively more complex due to numerous joints. For example, a typical lattice structure employs a standard bolted shear connection to join individual structural members together. Such joints increase construction time and present possible locations for wear and maintenance.

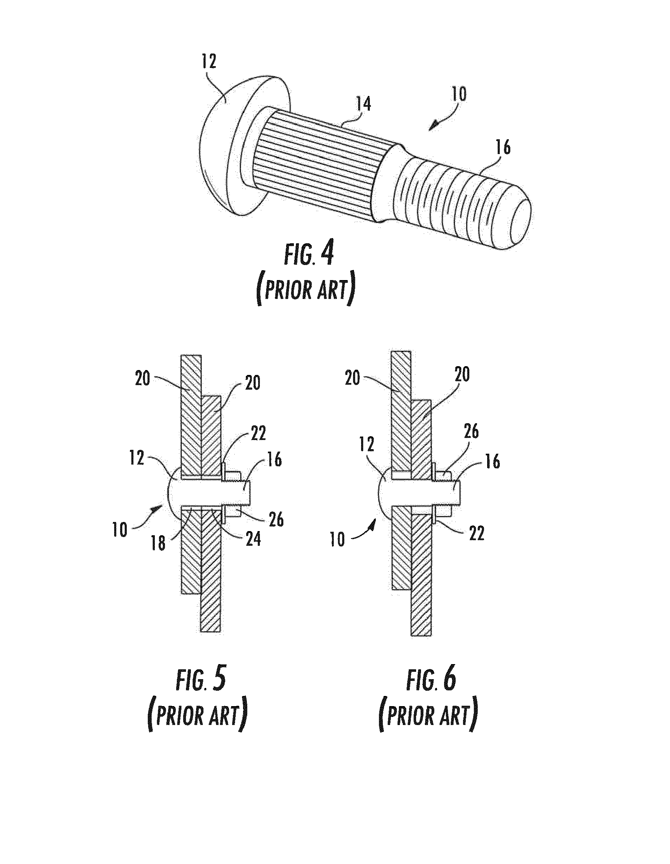

A known bolt connection used in a lattice tower structure to join structural members together is depicted in FIGS. 4 - 6. With this configuration, the bolt 10 has a threaded end section 16 and a larger diameter chamfered shaft section 14. The chamfered shaft section 14 lies between the bolt head 12 and the threaded end section 16. The diameter of the chamfered shaft section 14 is slightly smaller than the through holes 18 in the connected lattice members 20 (i.e. leaving a small assembly tolerance 24) so as to engage in a relatively snug fit within the aligned through holes 18. In an assembled state, the threaded end section 16 is engaged by a nut 26 and a washer 22 and is tightened so as to give the bolt a required preload. (FIGS. 5 and 6). The ability of the bolt connection to resist slippage is dependent on the coefficient of friction between the connected members 20 and the bolt preload.

Although this bolt connection may provide a relatively good balance between strength and maintenance, the preload may be difficult to control and maintain in wind turbine lattice tower structures, which commonly experience cyclic loading. For example, lattice tower structures commonly experience "slippage," which occurs when the preload of the bolt connection fails and the structural members slide or "slip" relative to each other in an amount equal to the assembly tolerance 24. (FIG. 6). As such, slippage is a concern in lattice tower structures and may cause mechanical wear of the structural members, loosening of the fasteners and/or bolts, or loss of structural integrity.

Accordingly, an improved bolt connection assembly is desirable that provides the strength and maintenance aspects of the prior art bolt connection of FIGS. 4 - 6, while also eliminating potential slippage between the lattice structural members.

Various aspects and advantages of the invention will be set forth in part in the following description, or may be clear from the description, or may be learned through practice of the invention.

In accordance with aspects of the invention, a bolt connection assembly is provided that is particularly well-suited for connecting structural members of a lattice tower structure of a wind turbine. The bolt connection assembly is not, however, limited to this use and may have utility in any environment or application, for example in building or bridge structures wherein the unique benefits of the bolt connection assembly would be advantageous. The bolt connection assembly includes a bolt component having a head and a shaft, and a structural bore component having a bore defined therethrough for receipt of the bolt component. Further, the shaft includes a knurled surface that defines an outermost shaft diameter. Moreover, the knurled surface includes a plurality of knurls, each defining a non-arcuate edge. The bore in the structural bore component has a defined bore diameter, wherein the outermost shaft diameter of the knurled surface is greater than the bore diameter. In an assembled state of the bolt connection assembly, the bolt component is inserted within the structural bore component such that the knurled surface is deformed to friction fit within the bore diameter.

In further embodiments, the structural bore component may include multiple structural members having aligned bores defined therethrough for receipt of the bolt component. Further, the aligned bores may have varying diameters, wherein the outermost shaft diameter may be greater than at least one of the aligned bore diameters.

In still additional embodiments, the shaft of the bolt component may further include a threaded end section. As such, the bolt component may be drawn within the bore or aligned bores by the threaded end section. Further, the threaded end section may be engaged by a nut component and a washer component, wherein the nut component is configured to give the bolt component a predetermined preload. Moreover, the washer component may be assembled between the structural members and the nut component so as to provide a more even load on the bolt component. Additionally, the washer component may be a wedge-style, a ramp-style washer, or similar. More specifically, the washer component may be a wedge-locking washer. As such, the combination of the friction fit between the knurled surface and the bore component together with the preload provided by the torqued nut component and the wedge-locking washer contributes to improved joint reliability in a wind turbine lattice structure.

In still further embodiments, each of the plurality of knurls may define a cross-section having a triangular, square, rectangular, or any other suitable shape. In another embodiment, the plurality of knurls may define a cross-section having a round shape. Further the plurality of knurls may extend length-wise on the shaft or may extend cross-wise on the shaft. Additionally, the plurality of knurls may be spaced apart by a circumferential segment defined by a nominal diameter of the shaft at regular intervals or randomly on the shaft.

It should be understood that the bolt component and the structural bore component may have various dimensions as a function of the size of the tower structure intended to be assembled by the bolt connection assembly, specified load and desired degree of pretension deformation, and so forth. The invention is not limited to any particular dimensions of the respective components.

The present invention also encompasses any manner of a wind turbine lattice tower structure having a plurality of structural members, such as legs and braces, connected together to define a lattice tower structure. A plurality of bolt connection assemblies in accordance with aspects of the invention are provided at the connection junctures of the structural members.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 is a perspective view of a wind turbine with a lattice tower structure;
FIG. 2 is a perspective view of an alternative embodiment of a wind turbine with a lattice tower structure;
FIG. 3 is a detailed perspective view of structural components of a wind turbine lattice tower structure particularly illustrating a plurality of bolt connections assemblies at the connection junctures of the components;
FIG. 4 is a perspective view of a bolt component of a prior art bolt connection;
FIG. 5 is a side view of a prior art bolt connection in an initial condition using the bolt component of FIG. 4;
FIG. 6 is a side view of a prior art bolt connection in a slipped condition using the bolt component of FIG. 4;
FIG. 7 is a side view of one embodiment of a bolt connection assembly according to the present disclosure in an unassembled state;
FIG. 8 is a side view of the embodiment of FIG. 7 in an assembled state;
FIG. 9 is another side view of the embodiment of FIG. 7 in an assembled state;
FIG. 10 is a side view of one embodiment of a bolt component according to the present disclosure;
FIG. 11 is a side view of another embodiment of a bolt component according to the present disclosure;
FIG. 12 is a cross-sectional view of one embodiment of a bolt component according to the present disclosure;
FIG. 13 is another cross-sectional view of one embodiment of a bolt component according to the present disclosure;
FIG. 14 is another cross-sectional view of one embodiment of a bolt component according to the present disclosure;
FIG. 15 is another cross-sectional view of one embodiment of a bolt component according to the present disclosure; and,
FIG. 16 is another cross-sectional view of one embodiment of a bolt component according to the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

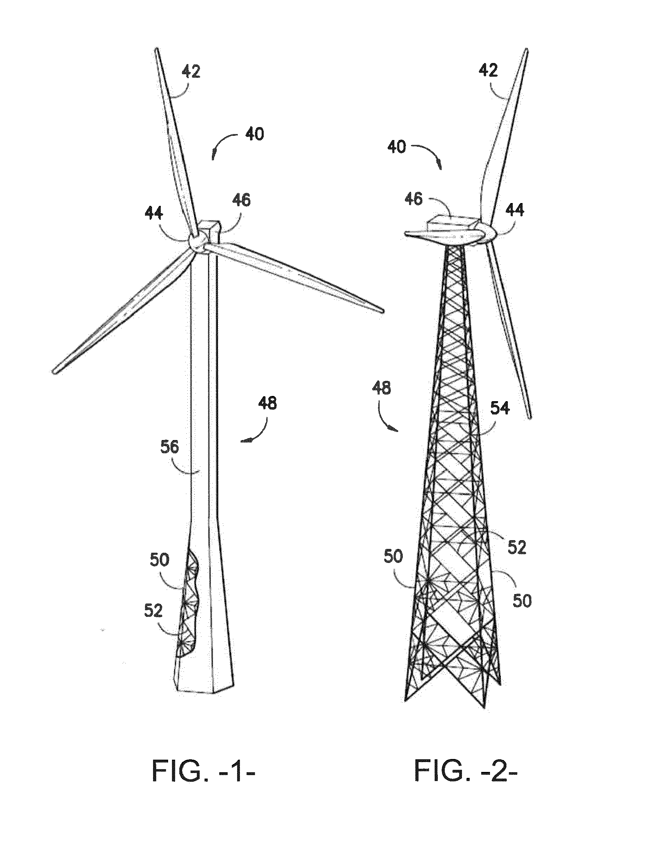

FIGS. 1 and 2 are perspective views of exemplary wind turbines 40. The wind turbines 40 include a plurality of blades mounted to a rotor hub 44, which in turn is rotationally supported by any manner of power generation components housed within a nacelle 46, as is well known in the art. The nacelle 46 is supported atop a tower structure 48, which in the illustrated embodiments is an open lattice structure formed by a plurality of structural members 50, 52, 54. The legs 50 and braces 52, 54 (both diagonal and horizontal) may be angle iron members or pipe members, but are not limited to this configuration. Further, the lattice tower structure 48 may be fabricated in sections and erected at the wind turbine site. These lattice frame tower structures 48 are also referred to in the art as "space frame" towers.

In the embodiment of FIG. 1, a cladding material 56 is applied over the lattice structure 48, which may be any type of suitable fabric, such as an architectural fabric designed for harsh weather conditions. The cladding 56 protects workers and equipment within the tower and provides an aesthetic appearance to the wind turbine 40.

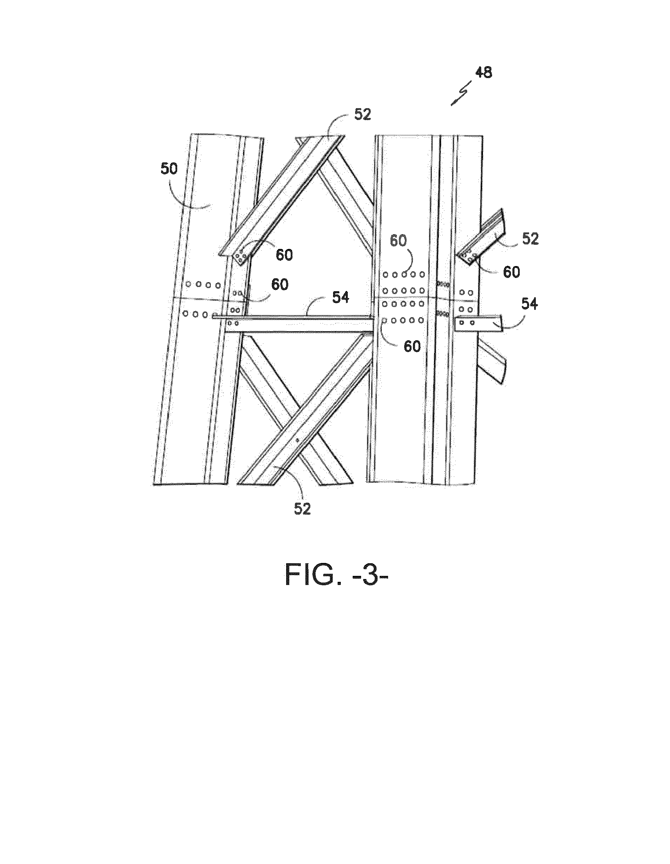

FIG. 3 is a more detailed view of the structural members 50 of the lattice structure tower 48, and particularly illustrates a plurality of bolt connection assembly locations between the braces 52, 54 and the legs 50, as well as between aligned sections of the legs 50. A plurality of bolt connection assemblies 60 are utilized at these various connection locations and are utilized to join at least two structural members 50, 52, 54 together. In further embodiments, more than two structural members (e.g. three or more) may be joined together with the bolt connection assembly described in greater detail below.

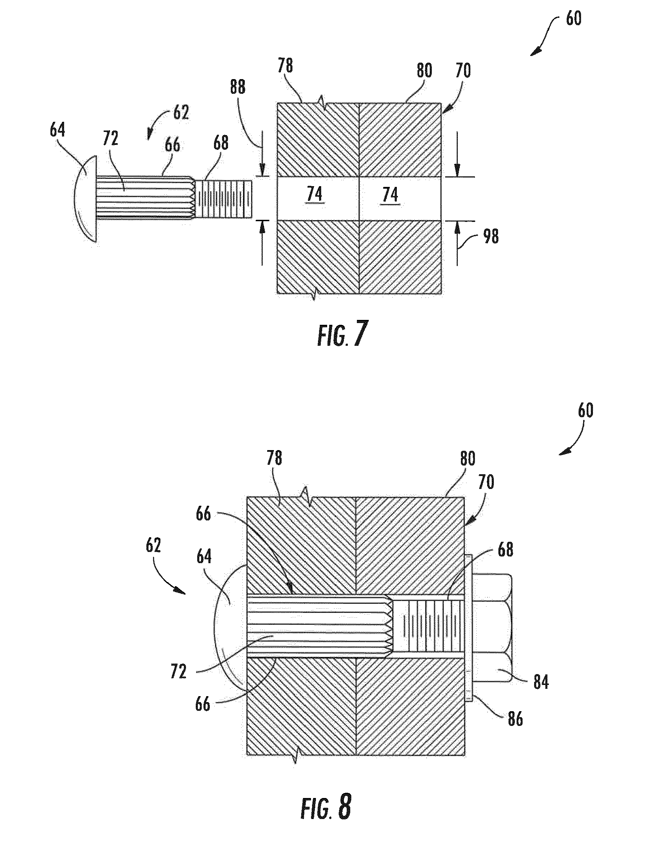

FIGS. 7 and 8 depict a bolt connection assembly 60 in accordance with aspects of the present invention. The bolt connection assembly 60 is particularly suited for connecting structural members of a lattice tower structure 48, as depicted in FIGS. 1 and 2. The bolt connection assembly 60 is not, however, limited to this particular use, and may have utility in various other applications, such as bridge construction, building construction, and so forth. The bolt connection assembly 60 of the present disclosure eliminates the assembly tolerance between a bolt and corresponding structural members by using a bolt with a knurled surface having a diameter larger than a corresponding bore. As such, when the bolt connection assembly 60 is in an assembled state, the knurled surface of the bolt component and the bore may be deformed so as to create an interference or friction fit between the bolt and the bore. A nut component and washer component are then secured to the bolt component. In this manner, the bolt connection assembly 60 of the present disclosure does not rely on bolt preload alone to ensure connection effectiveness. Rather, less bolt preload is required due to the absence of the assembly tolerance (i.e. slippage cannot physically occur). Accordingly, the present disclosure provides a bolt connection assembly that resists slippage due to the combination of the friction fit between the deformed knurled surface and the bore component together with the nut component and the washer component.

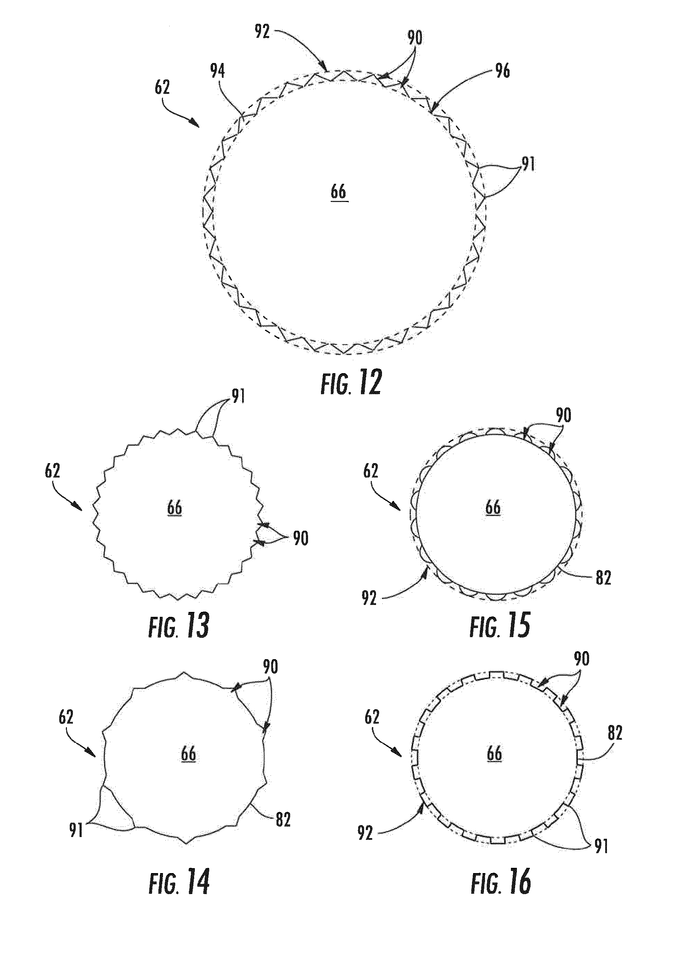

More specifically, and still referring to FIGS. 7 and 8, the bolt connection assembly 60 may include a bolt component 62 having a head 64 and a shaft 66, and a structural bore component 70 having a bore 74 defined therethrough for receipt of the bolt component 62. Further, the bore 74 defines a bore diameter 98. More specifically, the structural bore component 70 may include multiple structural members 78, 80 having aligned bores 74 defined therethrough for receipt of the bolt component 62. The shaft 66 may have a length so as to extend into the aligned bores 74 of the structural bore members 78, 80. Further, the shaft 66 of the bolt component 62 includes a knurled surface 72 defining an outermost shaft diameter 92 (FIG. 12), wherein the outermost shaft diameter 92 (i.e. the outer diameter of the knurled surface 72) is larger than at least one of the aligned bores 74. For example, the structural members 78, 80 may have varying bore diameters 88, 98. As such, the outermost shaft diameter 92 may be greater than both or one of the bore diameters 88, 98. In various embodiments, the outermost shaft diameter 92 may be about 0.01 inches to about 0.025 inches larger than the bore diameter 98.

In an assembled state, as shown in FIG. 8, the bolt component 62 is inserted within the aligned bores 74 of the structural members 78, 80 such that the knurled surface 72 is deformed to fit within the bore diameters 88, 98. Accordingly, the knurled surface 72 and at least one of the aligned bores 74 may both deform to create an interference fit between the outermost shaft diameter 72 and the aligned bores 74. Further, in one embodiment, the bolt component 62 may be driven within the aligned bores 74 using any suitable means so as to provide enough force to deform the knurled surface 72 to fit within the bore diameters 88, 98. More specifically, the bolt component 62 may be driven within the aligned bores 74 using any suitable tool in the art, such as a hammer or similar.

In further embodiments, the shaft 66 of the bolt component 62 may also include a threaded end section 68. As such, the bolt component 62 may be drawn within the aligned bores 74 by the threaded end section 68. In one embodiment, the bolt component 62 may include a knurled surface 72 as described herein and a threaded end section 68 such that the bolt component 62 may be partially driven and partially drawn into the aligned bores 74. Further, the threaded end section 68 may be drawn within the aligned bores 74 using any suitable means known in the art, including but not limiting to, a driver, a drill, or similar.

In further embodiments, as illustrated in FIG. 8, the bolt component 62 may be further secured within the structural bore component 70 by a nut component 84 and a washer component 86. The nut component 84 may engage the bolt component 62 to provide a predetermined preload to the bolt component 62. In such an embodiment, the nut component 84 may be installed so as to provide a much lower preload to the bolt component 62 than typically required in a prior art bolt connection (as illustrated in FIGS. 4 - 6). For example, in one embodiment, the bolt component 62 is preloaded to about 70% of the bolt component's ultimate strength.

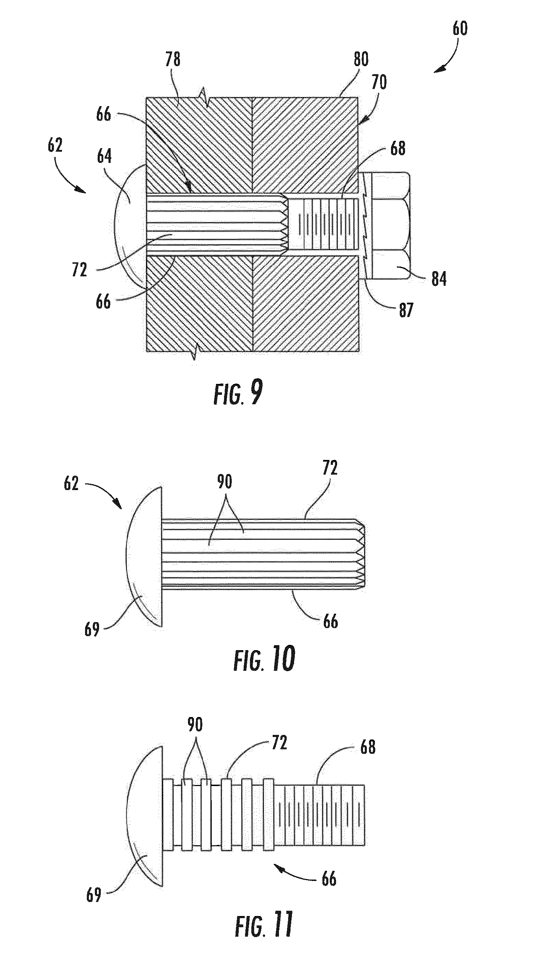

Further, the washer component 86 may be assembled between the structural bore component 70 and the nut component 84 so as to provide more even loading on the bolt component 62. Moreover, the washer component 86 may be any suitable washer known in the art. For example, the washer component 86 may be a wedge-style or ramp-style washer. More specifically, as illustrated in FIG. 9, the bolt connection assembly 60 includes a wedge-locking washer 87. Accordingly, the combination of the wedge-locking washer 87 and the interference fit between the bolt component 62 and the bore component 70 provides a bolt connection assembly that resists slippage and is ideal for a lattice tower structure of a wind turbine.

More specifically, the bolt connection assembly 60 as described herein provides a substantially maintenance-free assembly by dividing the potential loading and loosening experienced by the joint to more than one component. For example, the tension in the bolt component 62 provided by the torque on the nut component 84 protects the assembly 60 from lower level fatigue loads, whereas the interference fit between the bolt component 62 and the structural bore component 70 protects the assembly 60 from higher level fatigue loads. Further, the interference fit prevents relative lateral movement (i.e. slippage) between the structural members 78, 80 and the wedge-style washer component 87 prevents loosening of the nut component 84 due to the potential prying action of the structural members towards or away from the nut component 84. As such, the bolt connection assembly 60 as described herein provides at least two mechanisms for handling loads acting on the joint and at least two mechanisms for handling loosening of the nut. Accordingly, if one mechanism fails, the integrity of the bolt connection assembly is not compromised. Additionally, the need for workers to constantly tighten the nut components 84 is decreased.

Referring now to FIGS. 10 - 11, the shaft 66 is illustrated having a knurled surface 72. The knurled surface 72 includes a plurality of knurls 90 spaced circumferentially around the shaft 66 from a nominal shaft diameter 96, wherein the nominal diameter 96 is less than the bore diameter 98. In one embodiment, the plurality of knurls 90 may extend substantially length-wise on the shaft 66 (FIG. 10). In such an embodiment, the knurls 90 may extend the entire length of the shaft 66 (FIG. 10) or may extend only a portion of the length of the shaft 66 (FIG. 11). In the latter embodiment, the remaining portion of the shaft 66 may include the threaded end section 68. In still further embodiments, the plurality of knurls 90 may extend substantially cross-wise on the shaft 66 (FIG. 11). In still further embodiments, the knurls 90 may be diagonal on the shaft 66. Additionally, the plurality of knurls 90 may be spaced at regular intervals on the shaft 66 or may be spaced randomly on the shaft.

Referring now to FIGS. 12 - 16, various embodiments of the knurled surface 72 including the plurality of knurls 90 described herein are illustrated. As shown, each knurl 90 defines a cross-section 94. Further, in various embodiments as illustrated in FIGS. 12-14 and 16, each of the plurality of knurls defines a non-arcuate edge 91. As shown, the non-arcuate edges 91 may be part of a triangular, square, rectangular, or similar cross-section 94 having a straight or pointed edge. As such, less insertion force is required to drive the bolt component within the bore component. More specifically, as shown in FIGS. 12-14, the knurls 90 have a triangular shape, the tips of which (i.e. the non-arcuate edge 91 of each) easily deform when driven into the bore component 70. Similarly, as shown in FIG. 16, the cross-section 94 of each knurl 90 may also be square or rectangular, or any other suitable shape known in the art having a non-arcuate edge 91. The straight or pointed non-arcuate edges of each knurl 90 deform within the aligned bores 74 and may easily deform the bore component 70 as well when the bolt connection assembly is in an assembled state.

Alternatively, in additional embodiments, the plurality of knurls 90 may comprise a round cross-section 94. For example, as shown in FIG. 15, the knurls 90 do not include a non-arcuate edge 91, but rather include a smooth profile. In still further embodiments, the knurls 90 may be spaced apart by a circumferential segment 82 defined by the nominal diameter 96 of the shaft 66. For example, the embodiment illustrated in FIG. 15 depicts a plurality of round knurls 90 spaced apart by circumferential segments 82. Such a configuration requires less insertion force than a bolt component having a continuously smooth profile.

In still further embodiments, the cross-section 94 of each knurl 90 may have the same shape, may each have a different shape, or any combination thereof. Additionally, the cross-section 94 of the knurls 90 should not be limited to the shapes specifically disclosed herein, but may include any suitable shape known in the art. Further, any number of knurls 90 may be employed on the shaft 66 of the bolt component 62 so as to provide an appropriate interference fit within the structural bore component 70. In various embodiments, the number of knurls N to the nominal shaft diameter D (N/D) typically ranges from about 10 to about 40. For example, two embodiments having varying N/D ratios are illustrated in FIGS. 13 and 14. As such, the knurls 90 may be spaced such that each knurl abuts against a neighboring knurl 90 (FIG. 13), or may be spaced apart by circumferential segments 82 (FIG. 14).

As mentioned, the bolt connection assembly 60 may have various dimensions as a function of the size of the tower structure intended to be assembled, specified load and desired degree of pretension deformation, and so forth. The invention is not limited to any particular dimensions of the respective components. Further, the head 64 and the shaft 66 are not limited to any particular size, shapes, or lengths. For example, the head 64 may have various styles including a rivet and a hex-bolt style. Further, the shaft 66 may have any design length for connecting structural members 78, 80 of the lattice tower structure 48. More specifically, the shaft 66 may have a sufficient length so as to extend entirely through both aligned bores 74 or may extend only partially through the aligned bores 74.

The bolt connection assembly 60 may be made of any suitable material known in the art that would provide the appropriate strength for connecting lattice structural members 78, 80. For example, in various embodiments, the bolt component 62 may be fabricated of low carbon steel or alloy steel. Further, the bolt component 62 may be made of suitable materials selected relative to the materials selected for the aligned bores 74 such that the knurled surface 72 is capable of deforming to fit within the structural bore component 70. Additionally, the knurled surface 72 of the bolt component 62 may be fabricated using any suitable manufacturing process known in the art. For example, in one embodiment, the knurled surface 72 may be fabricated by machining grooves in the shaft 66 to make the plurality of knurls 90.

It should be readily appreciated that the present invention also encompasses a wind turbine lattice tower structure 48, as depicted in FIGS. 1 and 2, and incorporates the bolt connection assembly 60 as described herein.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A bolt connection assembly that is particularly suited for connecting structural members of a lattice tower structure for a wind turbine, comprising:
   a bolt component having a head and a shaft, said shaft comprising a knurled surface, said knurled surface comprising a plurality of knurls, wherein each of the plurality of knurls defines a non-arcuate edge, wherein said knurled surface defines an outermost shaft diameter; and
   a structural bore component having a bore defined therethrough for receipt of said bolt component, said bore having a defined bore diameter, wherein said outermost shaft diameter is greater than said bore diameter;
   wherein in an assembled state of said bolt connection assembly, said bolt component is inserted within said bore such that said knurled surface is deformed to friction fit within said bore diameter.
2. The bolt connection assembly as in clause 1, wherein in said assembled state, said bore is deformed by said bolt component.
3. The bolt connection assembly as in any preceding clause, wherein said structural bore component comprises multiple structural members having aligned bores defined therethrough for receipt of said bolt component.
4. The bolt connection assembly as in any preceding clause, wherein said aligned bores have varying diameters, wherein said outermost shaft diameter is greater than at least one of said aligned bore diameters.
5. The bolt connection assembly as in any preceding clause, wherein said shaft further comprises a threaded end section, wherein said bolt component is drawn within said bore by said threaded end section.
6. The bolt connection assembly as in any preceding clause, further comprising a nut component engaged with said threaded end section so as to provide a predetermined preload on the bolt component.
7. The bolt connection assembly as in any preceding clause, wherein said threaded end section further comprises a washer component assembled between said structural bore component and said nut component.
8. The bolt connection assembly as in any preceding clause, wherein the washer component is a wedge-locking washer.
9. The bolt connection assembly as in any preceding clause, wherein said plurality of knurls each define a cross-section, said cross-section comprising one of a triangular, square, or rectangular shape.
10. The bolt connection assembly as in any preceding clause, wherein said plurality of knurls comprise one of length-wise knurls on said shaft or cross-wise knurls on said shaft.
11. A wind turbine lattice tower structure, comprising:
   a plurality of structural members connected together to define an open lattice tower;
   a plurality of bolt connection assemblies at connection junctures of said structural members, said bolt connection assemblies further comprising:
      a bolt component having a head and a shaft, said shaft comprising a knurled surface, said knurled surface comprising a plurality of knurls, wherein each of the plurality of knurls defines a non-arcuate edge, wherein said knurled surface defines an outermost shaft diameter; and,
      a structural bore component having a bore defined therethrough for receipt of said bolt component, said bore having a defined bore diameter, wherein said outermost shaft diameter is greater than said bore diameter,
   wherein in an assembled state of said bolt connection assembly, said bolt component is inserted within said bore such that said knurled surface is deformed to friction fit within said bore diameter.
12. The bolt connection assembly as in any preceding clause, wherein in said assembled state, said bore is deformed by said bolt component.
13. The wind turbine lattice tower structure as in any preceding clause, wherein said structural bore component comprises multiple structural members having aligned bores defined therethrough for receipt of said bolt component.
14. The wind turbine lattice tower structure as in any preceding clause, wherein said aligned bores have varying diameters, wherein said outermost shaft diameter is greater than at least one of said aligned bore diameters.
15. The wind turbine lattice tower structure as in any preceding clause, wherein said shaft further comprises a threaded end section, wherein said bolt component is drawn within said bore by said threaded end section.
16. The wind turbine lattice tower structure as in any preceding clause, further comprising a nut component engaged with said threaded end section so as to provide a predetermined preload on the bolt component.
17. The wind turbine lattice tower structure as in any preceding clause, wherein said threaded end section further comprises a washer component assembled between said structural members and said nut component.
18. The wind turbine lattice tower structure as in any preceding clause, wherein the washer component is a wedge-locking washer.
19. The wind turbine lattice tower structure as in any preceding clause, wherein said plurality of knurls each define a cross-section, said cross-section comprising one of a triangular, square, or rectangular shape.
20. The wind turbine lattice tower structure as in any preceding clause, wherein said plurality of knurls comprise one of length-wise knurls on said shaft or cross-wise knurls on said shaft.

## Claims

1. A bolt connection assembly (60) for connecting structural members (50) of a lattice tower structure (48) for a wind turbine (40), comprising:
a bolt component (62) having a head (64) and a shaft (66), said shaft (66) comprising a knurled surface (72), said knurled surface (72) comprising a plurality of knurls (90), wherein each of the plurality of knurls (90) defines a non-arcuate edge, wherein said knurled surface (72) defines an outermost shaft diameter (92); and
a structural bore component (70) having a bore (74) defined therethrough for receipt of said bolt component (62), said bore (74) having a defined bore diameter (98), wherein said outermost shaft diameter (92) is greater than said bore diameter (98);
wherein in an assembled state of said bolt connection assembly (60), said bolt component (62) is inserted within said bore (74) such that said knurled surface (72) is deformed to friction fit within said bore diameter (98).

2. The bolt connection assembly (60) as in claim 1, wherein in said assembled state, said bore (74) is deformed by said bolt component (62).

3. The bolt connection assembly (60) as in any preceding claim, wherein said structural bore component (70) comprises multiple structural members (78, 80) having aligned bores defined therethrough for receipt of said bolt component (62).

4. The bolt connection assembly (60) as in claim 3, wherein said aligned bores (74) have varying diameters, wherein said outermost shaft diameter is greater than at least one of said aligned bore diameters.

5. The bolt connection assembly (60) as in any preceding claim, wherein said shaft (66) further comprises a threaded end section (68), wherein said bolt component (62) is drawn within said bore (74) by said threaded end section (68).

6. The bolt connection assembly (60) as in claim 5, further comprising a nut component (84) engaged with said threaded end section (68) so as to provide a predetermined preload on the bolt component (62).

7. The bolt connection assembly (60) as in claim 5 or claim 6, wherein said threaded end section (68) further comprises a washer component (86) assembled between said structural bore component (70) and said nut component (84).

8. The bolt connection assembly (60) as in claim 7, wherein the washer component (86) is a wedge-locking washer.

9. The bolt connection assembly (60) as in any preceding claim, wherein said plurality of knurls (90) each define a cross-section, said cross-section comprising one of a triangular, square, or rectangular shape.

10. The bolt connection assembly (60) as in any preceding claim, wherein aid plurality of knurls (90) comprise one of length-wise knurls on said shaft or cross-wise knurls on said shaft.

11. A wind turbine lattice tower structure (48), comprising:
a plurality of structural members (50) connected together to define an open lattice tower;
a plurality of bolt connection assemblies (60) at connection junctures of said structural members (50), said bolt connection assemblies (60) further comprising:
a bolt component (62) having a head and a shaft, said shaft comprising a knurled surface, said knurled surface comprising a plurality of knurls, wherein each of the plurality of knurls defines a non-arcuate edge, wherein said knurled surface defines an outermost shaft diameter; and,
a structural bore component (70) having a bore defined therethrough for receipt of said bolt component, said bore having a defined bore diameter, wherein said outermost shaft diameter is greater than said bore diameter,
wherein in an assembled state of said bolt connection assembly (60), said bolt component (62) is inserted within said bore (74) such that said knurled surface is deformed to friction fit within said bore diameter.

12. The wind turbine lattice tower structure (48) as in claim 11, wherein said structural bore component (70) comprises multiple structural members having aligned bores defined therethrough for receipt of said bolt component.

13. The wind turbine lattice tower structure (48) as in claim 11 or claim 12, wherein said aligned bores (74) have varying diameters, wherein said outermost shaft diameter is greater than at least one of said aligned bore diameters.

14. The wind turbine lattice tower structure (48) as in any of claims 11 to 13, wherein said shaft further comprises a threaded end section (68), wherein said bolt component is drawn within said bore (74) by said threaded end section (68).

15. The wind turbine lattice tower structure (48) as in any of claims 11 to 14, further comprising a nut component (84) engaged with said threaded end section (68) so as to provide a predetermined preload on the bolt component (62).
